# EUROPEAN PATENT APPLICATION

(11) **EP 4 847 385 A2**
(43) Date of publication of application: **02.12.2026**
(21) Application number: 26172050.2
(22) Date of filing: 13.04.2026
(51) Int. Cl.: B64D 27/10, B64D 27/40, B64D 29/06, B64D 29/08, F01D 9/00, B64D 27/00

(54) **HOUSING STRUCTURE FOR AN OPEN ROTOR AIRCRAFT PROPULSION SYSTEM**

(30) Priority: 12.04.2025 US 202519177544
(71) Applicant: RTX Corporation, Farmington, CT 06032 (US)
(72) Inventor: SOBANSKI, Jon E., Glastonbury, 06033 (US); BREAULT, Andrew E., Bolton, 06043 (US); MORTON, Jeffrey T., Manchester, 06040 (US)
(74) Representative: Dehns

(57) **Abstract**

An assembly for an aircraft propulsion system (20) includes a housing structure (54), an open guide vane structure (36), and a flowpath (70). The housing structure (54) includes an upstream housing end and a pylon structure (110). The pylon structure (110) includes a main pylon body (130) and a front center body (132) attached to the main pylon body (130). The front center body (132) is disposed at the upstream housing end. The front center body (132) includes an outer radial case structure (134) and an inner radial case structure (136) extending circumferentially about an axis (24) of the aircraft propulsion system (20). The open guide vane structure (36) includes a guide vane structure base (50) disposed at the outer radial case structure (134). The flowpath (70) extends through the aircraft propulsion system (20) from an inlet (72) into the flowpath (70) to an exhaust (74) from the flowpath (70). The inlet (72) is formed by the front center body (132) between the outer radial case structure (134) and the inner radial case structure (136).

## Description

### BACKGROUND

### 1. Technical Field

This disclosure relates generally to an aircraft and, more particularly, to an open rotor propulsion system for the aircraft.

### 2. Background Information

Various types and configurations of aircraft propulsion systems are known in the art including those with one or more open propulsor rotors. While these known aircraft propulsion systems have various benefits, there is still room in the art for improvement.

### SUMMARY

According to an aspect of the present disclosure, an assembly for an aircraft propulsion system includes a propulsion system housing structure, an open guide vane structure, and a propulsion system flowpath. The propulsion system housing structure includes an upstream housing end and a pylon structure. The pylon structure includes a main pylon body and a front center body attached to the main pylon body. The front center body is disposed at the upstream housing end. The front center body includes an outer radial case structure and an inner radial case structure extending circumferentially about an axis of the aircraft propulsion system. The open guide vane structure includes a guide vane structure base disposed at the outer radial case structure. The propulsion system flowpath extends through the aircraft propulsion system from an inlet into the propulsion system flowpath to an exhaust from the propulsion system flowpath. The inlet is formed by the front center body between the outer radial case structure and the inner radial case structure.

In any of the aspects or embodiments described above and herein, the front center body may form the guide vane structure base.

In any of the aspects or embodiments described above and herein, the open guide vane structure may further include a plurality of open guide vanes, each of the plurality of open guide vanes may be coupled to the guide vane structure base, and each of the plurality of open guide vanes may project radially outward from the guide vane structure base.

In any of the aspects or embodiments described above and herein, the assembly may further include an open propulsor rotor including a plurality of open propulsor blades arranged circumferentially around the axis, each of the plurality of open propulsor blades may project radially out into an environment external to the aircraft propulsion system, and the open propulsor rotor may be supported by the front center body.

In any of the aspects or embodiments described above and herein, the assembly may further include a turbine engine comprising an engine case assembly, a compressor section, a combustor section, and a turbine section, the compressor section, the combustor section, and the turbine section may be housed within the engine case assembly, the turbine section may include a turbine rotor operatively coupled to the open propulsor rotor, and the turbine rotor may be configured to drive rotation of the open propulsor rotor about the axis.

In any of the aspects or embodiments described above and herein, the propulsion system flowpath may extend through the compressor section, the combustor section, and the turbine section between the inlet and the exhaust.

In any of the aspects or embodiments described above and herein, the turbine rotor may be operatively coupled to the open propulsor rotor by a drivetrain, and the drivetrain may include a gearbox mounted to the front center body.

In any of the aspects or embodiments described above and herein, the assembly may further include a turbine engine comprising an engine case assembly, the engine case assembly may form an exterior housing of the turbine engine, and the engine case assembly may be mounted to the pylon structure at the front center body.

In any of the aspects or embodiments described above and herein, the engine case assembly may be further mounted to the pylon structure at the main pylon body.

In any of the aspects or embodiments described above and herein, the outer radial case structure may include a fixed outer structure segment, a first outer pivotable structure segment, and a second outer pivotable structure segment, the first outer pivotable structure segment and the second outer pivotable structure segment may each be pivotably mounted to the fixed outer structure segment, the first outer pivotable structure segment and the second outer pivotable structure segment may each be pivotable between a stowed outer segment position and an open outer segment position.

In any of the aspects or embodiments described above and herein, the inner radial case structure may include a fixed inner structure segment, a first inner pivotable structure segment, and a second inner pivotable structure segment, the first inner pivotable structure segment and the second inner pivotable structure segment may each be pivotably mounted to the fixed inner structure segment, the first inner pivotable structure segment and the second inner pivotable structure segment may each be pivotable between a stowed inner segment position and an open inner segment position.

In any of the aspects or embodiments described above and herein, the main pylon body, the outer radial case structure, and the inner radial case structure may form a unitary structure.

In any of the aspects or embodiments described above and herein, the propulsion system housing structure may further include a nacelle structure disposed radially outboard of and partially covering the front center body, and the nacelle structure may form an exterior flow boundary for the aircraft propulsion system that borders an environment external to the aircraft propulsion system.

In any of the aspects or embodiments described above and herein, the nacelle structure may form a receptacle at the guide vane structure base.

In any of the aspects or embodiments described above and herein, the pylon structure may further include an inlet guide vane assembly extending between the outer radial case structure and the inner radial case structure.

According to another aspect of the present disclosure, an assembly for an aircraft propulsion system includes a propulsion system housing structure, an open guide vane structure, and a propulsion system flowpath. The propulsion system housing structure includes an upstream housing end and a pylon structure. The pylon structure includes a front center body disposed at the upstream housing end. The front center body includes an outer radial case structure and an inner radial case structure extending circumferentially about an axis of the aircraft propulsion system. The open guide vane structure includes a guide vane structure base and a plurality of open guide vanes. The guide vane structure base is formed by the outer radial case structure. The plurality of open guide vanes are coupled to the guide vane structure base and project radially outward from the guide vane structure base. The propulsion system flowpath extends through the aircraft propulsion system from an inlet into the flowpath to an exhaust from the flowpath. The inlet is formed by the front center body between the outer radial case structure and the inner radial case structure.

In any of the aspects or embodiments described above and herein, the assembly may further include a turbine engine including an engine case assembly, the engine case assembly may form an exterior housing of the turbine engine, the engine case assembly may be mounted to the pylon structure at the front center body, and the turbine engine may further form the propulsion system flowpath between the inlet and the exhaust.

In any of the aspects or embodiments described above and herein, the assembly may further include an open propulsor rotor including a plurality of open propulsor blades arranged circumferentially around the axis, each of the plurality of open propulsor blades may project radially out into an environment external to the aircraft propulsion system, and the open propulsor rotor may be supported by the front center body.

According to an aspect of the present disclosure, an assembly for an aircraft propulsion system includes a propulsion system housing structure and a propulsion system flowpath. The propulsion system housing structure includes a pylon structure. The pylon structure includes a main pylon body and a front center body attached to the main pylon body. The front center body includes an outer radial case structure and an inner radial case structure extending circumferentially about an axis of the aircraft propulsion system. The outer radial case structure includes a fixed outer structure segment, a first outer pivotable structure segment, and a second outer pivotable structure segment. The fixed outer structure segment is attached to the main pylon body. The first outer pivotable structure segment and the second outer pivotable structure segment each pivotably mounted to the fixed outer structure segment. The inner radial case structure includes a fixed inner structure segment, a first inner pivotable structure segment, and a second inner pivotable structure segment. The first inner pivotable structure segment and the second inner pivotable structure segment are each pivotably mounted to the fixed inner structure segment. The propulsion system flowpath extends through the aircraft propulsion system from an inlet into the propulsion system flowpath to an exhaust from the propulsion system flowpath. The inlet is formed by the front center body between the outer radial case structure and the inner radial case structure.

In any of the aspects or embodiments described above and herein, the main pylon body and the fixed outer structure segment may form a unitary structure.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 schematically illustrates a cutaway, side view of an aircraft propulsion system, in accordance with one or more embodiments of the present disclosure.
FIG. 2 schematically illustrates a cutaway, side view of a portion of the aircraft propulsion system, in accordance with one or more embodiments of the present disclosure.
FIG. 3 schematically illustrates a cutaway, side view of a portion of the aircraft propulsion system including a pylon structure, in accordance with one or more embodiments of the present disclosure.
FIG. 4 schematically illustrates a cutaway view of a segmented pylon structure in a stowed arrangement, in accordance with one or more embodiments of the present disclosure.
FIG. 5 schematically illustrates a cutaway view of the segmented pylon structure in an open arrangement, in accordance with one or more embodiments of the present disclosure.
FIGS. 6A-B illustrate a plan view of guide vanes in various pitch positions, in accordance with one or more embodiments of the present disclosure.
FIG. 7 schematically illustrates aircraft propulsion system actuation systems controlled by multiple controllers, in accordance with one or more embodiments of the present disclosure.
FIG. 8 schematically illustrates a vane actuation system with a power source arrangement, in accordance with one or more embodiments of the present disclosure.
FIG. 9 schematically illustrates the vane actuation system with another power source arrangement, in accordance with one or more embodiments of the present disclosure.

### DETAILED DESCRIPTION

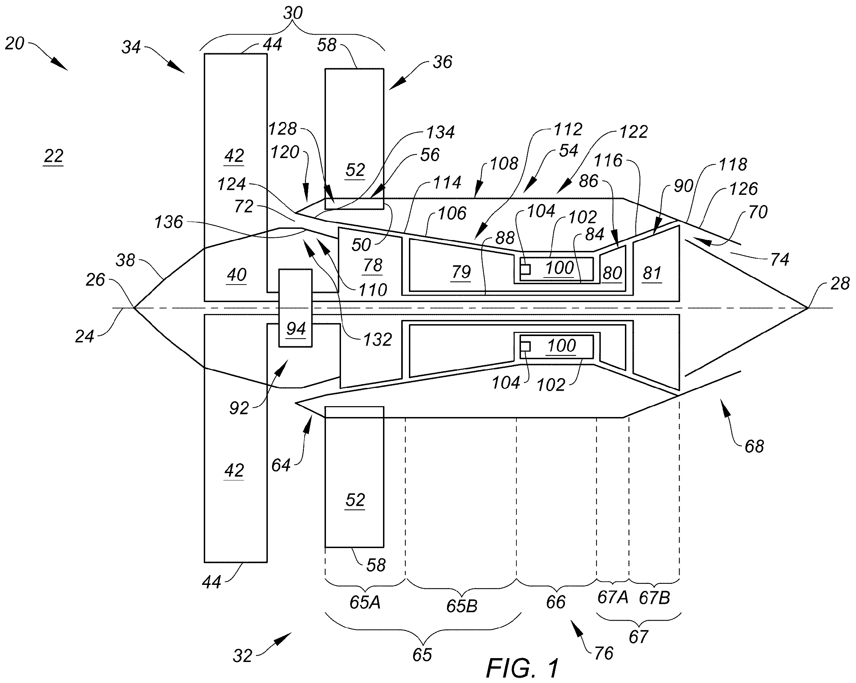

FIG. 1 is a schematic illustration of a propulsion system 20 for an aircraft. The aircraft may be an airplane, a drone (e.g., an unmanned aerial vehicle (UAV)), or any other manned or unmanned aerial vehicle or system. The aircraft propulsion system 20 may be configured as an open rotor propulsion system with a single open rotor and swirl recovery vane (SRV) architecture. Herein, the term "open" may describe a propulsion system section and/or a propulsion system component which is open to an environment 22 (e.g., an ambient environment) external to the aircraft propulsion system 20 and, more generally, the aircraft. However, aspects of the present disclosure may be equally applicable to some other aircraft propulsion system configurations including those having ducted propulsors.

The aircraft propulsion system 20 extends axially along an axis 24 between an upstream, forward end 26 of the aircraft propulsion system 20 and a downstream, aft end 28 of the aircraft propulsion system 20. The propulsion system axis 24 may be a centerline axis of the aircraft propulsion system 20 and/or a centerline axis of one or more members of the aircraft propulsion system 20. The propulsion system axis 24 may also or alternatively be a rotational axis of one or more members of the aircraft propulsion system 20. The aircraft propulsion system 20 of FIG. 1 includes an open rotor propulsion section 30 and a gas turbine engine 32.

The propulsion section 30 of FIG. 1 includes an open propulsor rotor 34 and an open guide vane structure 36. These propulsion section members 34 and 36 are un-ducted and/or unshrouded components of the aircraft propulsion system 20 and its propulsion section 30. In some embodiments, however, one or more of the propulsion section members 34 and 36 may be un-ducted yet may each include a small shroud. The propulsion section 30 also includes a nose cone 38 disposed at (e.g., on, adjacent or proximate) the propulsion system forward end 26. Briefly, this nose cone 38 may be configured as a spinner which is rotatable with the propulsor rotor 34 about the propulsion system axis 24. Alternatively, the nose cone 38 may be configured as a stationary structure of the propulsion section 30.

The propulsor rotor 34 includes a rotor base 40 (e.g., a disk or a hub) and a plurality of open propulsor blades 42 (e.g., airfoils). The propulsor blades 42 are arranged and may be equispaced circumferentially about the rotor base 40 and the propulsion system axis 24 in an array (e.g., a circular array). Each of the propulsor blades 42 is connected to (e.g., formed integral with or otherwise attached to) the rotor base 40. Each of the propulsor blades 42 projects spanwise along a span line of the respective propulsor blade 42 (e.g., radially relative to the propulsion system axis 24) out from an exterior surface of the rotor base 40, into the external environment 22, to a distal tip 44 of the respective propulsor blade 42. Each propulsor blade 42 is thereby configured as an un-ducted propulsor blade 42 which is exposed to (e.g., disposed in) the surrounding external environment 22.

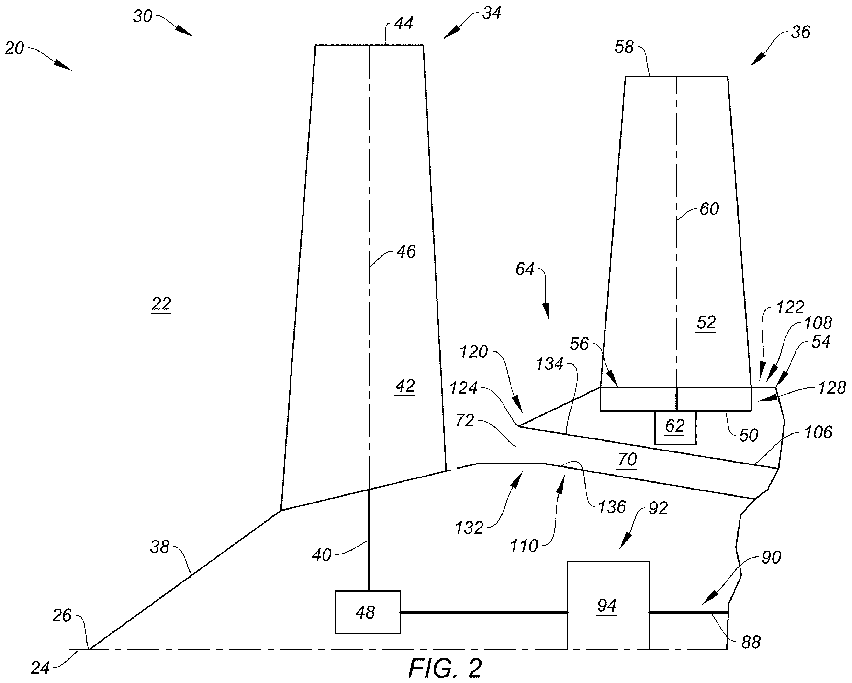

Referring to FIG. 2, each propulsor blade 42 may be configured to pivot about a respective blade pivot axis 46. This blade pivot axis 46 extends radially relative to the propulsion system axis 24. The blade pivot axis 46 of FIG. 2, for example, is arranged perpendicular to the propulsion system axis 24 when viewed, for example, in a longitudinal reference plane parallel to (e.g., including) the propulsion system axis 24 (e.g., the plane of FIG. 2). Each propulsor blade 42 of FIG. 2 is operatively coupled with a blade actuation system 48. This blade actuation system 48 is configured to pivot each propulsor blade 42 about its own respective blade pivot axis 46. By pivoting each propulsor blade 42 about its blade pivot axis 46, a pitch of the respective propulsor blade 42 may be changed. Note, while the blade pivot axis 46 is shown in FIG. 2 as being perpendicular to the propulsion system axis 24, it is contemplated this blade pivot axis 46 may or may not be coincident with the propulsion system axis 24. Moreover, it is contemplated each blade pivot axis 46 may alternatively be angularly offset from the propulsion system axis 24 by an acute angle or an obtuse angle when viewed, for example, in the longitudinal reference plane. Of course, it is contemplated that some or all of the propulsor blades 42 may be alternatively moved to change the propulsor blade pitch. Moreover, it is contemplated that some or all of the propulsor blades 42 may alternatively be fixed pitch propulsor blades in other embodiments.

The guide vane structure 36 of FIG. 1 includes a guide vane structure base 50 (e.g., a support ring, a skinned support frame, etc.) and a plurality of the open exit guide vanes 52 (e.g., airfoils). Briefly, at least (or only) an outer radial side of the structure base 50 and an outer radial side of a stationary housing structure 54 for the aircraft propulsion system 20 collectively form an aerodynamic exterior flow boundary 56 of the aircraft propulsion system 20 (e.g., a propulsion system mold line) which borders the external environment 22. The guide vanes 52, sometimes referred to as "swirl recovery vanes (SRVs), are arranged and may be equispaced circumferentially about the propulsion system axis 24 and the structure base 50 in an array (e.g., a circular array). This guide vane structure 36 and its guide vanes 52 are arranged axially next to (e.g., adjacent) the propulsor rotor 34 and its propulsor blades 42. The guide vane structure 36 and its guide vanes 52 of FIG. 1, for example, are arranged downstream of the propulsor rotor 34 and its propulsor blades 42, for example, without (e.g., any) other elements axially therebetween to obstruct, turn and/or otherwise influence the air propelled by the propulsor rotor 34 to the guide vane structure 36. Each of the guide vanes 52 of FIG. 1 is coupled to the structure base 50. Each of the guide vanes 52 projects spanwise along a span line of the respective guide vane 52 (e.g., radially relative to the propulsion system axis 24) out from the structure base 50 at the exterior flow boundary 56, into the external environment 22, to a distal tip 58 of the respective guide vane 52, which may be unshrouded or shrouded. Each guide vane 52 is thereby configured as an un-ducted and/or unshrouded guide vane which is exposed to (e.g., disposed in) the surrounding external environment 22.

Referring to FIG. 2, each guide vane 52 may be configured to pivot about a respective vane pivot axis 60. This vane pivot axis 60 extends radially relative to the propulsion system axis 24. The vane pivot axis 60 of FIG. 2, for example, is arranged perpendicular to the propulsion system axis 24 when viewed, for example, in the longitudinal reference plane. Each guide vane 52 of FIG. 2 is operatively coupled with a vane actuation system 62, which vane actuation system 62 of FIG. 2 may be discrete from or integrated as part of the blade actuation system 48. The vane actuation system 62 is configured to pivot each guide vane 52 about its own respective vane pivot axis 60. By pivoting each guide vane 52 about its vane pivot axis 60, a pitch of the respective guide vane 52 may be changed. Note, while the vane pivot axis 60 is shown in FIG. 2 as being perpendicular to the propulsion system axis 24, it is contemplated this vane pivot axis 60 may or may not be coincident with the propulsion system axis 24. Moreover, it is contemplated that each vane pivot axis 60 may alternatively be angularly offset from the propulsion system axis 24 by an acute angle or an obtuse angle when viewed, for example, in the longitudinal reference plane. Of course, it is contemplated some or all of the guide vanes 52 may be alternatively moved to change the guide vane pitch. Moreover, it is contemplated that some or all of the guide vanes 52 may alternatively be fixed pitch guide vanes in other embodiments.

The guide vane structure 36 is described above as a fixed (e.g., non-rotatable) guide vane structure. It is contemplated, however, that the guide vane structure 36 may alternatively be selectively rotatable about the propulsion system axis 24. With such an arrangement, the aircraft propulsion system 20 may be configured as an open rotor propulsion system with a swirl recovery blade (SRB) open rotor architecture. More particularly, the aircraft propulsion system 20 may operate as: (A) a counter-rotating open rotor (CROR) propulsion system during a dual rotor mode of operation (e.g., when both the propulsor rotor 34 and the structure 36 are counter-rotating about the propulsion system axis 24); and (B) a single open rotor and swirl recovery vane (SRV) propulsion system during a single rotor mode of operation (e.g., when the propulsor rotor 34 is rotating and the structure 36 is rotationally fixed about the propulsion system axis 24). Note, when the guide vane structure 36 is configured to selectively rotate about the propulsion system axis 24, the moving guide vanes 52 operate as propulsor blades.

Referring to FIG. 1, the turbine engine 32 includes an inlet section 64, a compressor section 65, a combustor section 66, a turbine section 67 and an exhaust section 68. The compressor section 65 of FIG. 1 includes a low-pressure compressor (LPC) section 65A and a high-pressure compressor (HPC) section 65B. The turbine section 67 of FIG. 1 includes a high-pressure turbine (HPT) section 67A and a low-pressure turbine (LPT) section 67B. The turbine engine 32 also includes an (e.g., annular) engine flowpath 70 which extends longitudinally through the aircraft propulsion system 20 of FIG. 1 and its turbine engine 32 from a (e.g., annular) flowpath inlet 72 into the engine flowpath 70 to a (e.g., annular) combustion products exhaust 74 from the engine flowpath 70. The flowpath inlet 72 is also an airflow inlet into the aircraft propulsion system 20 of FIG. 1 and its turbine engine 32. The flowpath exhaust 74 is also a combustion products exhaust from the aircraft propulsion system 20 of FIG. 1 and its turbine engine 32. At least (or only) the LPC section 65A, the HPC section 65B, the combustor section 66, the HPT section 67A and the LPT section 67B collectively form a core 76 (e.g., a gas generator) of the turbine engine 32.

Each of the engine sections 65A, 65B, 67A and 67B includes a respective bladed rotor 78-81 (e.g., a ducted and/or shrouded engine rotor). Each of these engine rotors 78-81 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 70. Each of the rotor blades is connected to the respective rotor base. Each of the rotor blades projects radially (e.g., spanwise) out from the respective rotor base into the engine flowpath 70 and to a distal tip of the respective rotor blade.

The HPC rotor 79 is coupled to and rotatable with the HPT rotor 80. The HPC rotor 79 of FIG. 1, for example, is connected to the HPT rotor 80 by a high-speed shaft 84. At least (or only) the HPC rotor 79, the HPT rotor 80, and the high-speed shaft 84 collectively form a high-speed rotating structure 86 (e.g., a high-speed spool of the engine core 76). This high-speed rotating structure 86 of FIG. 1 and its members 79, 80, and 84 are rotatable about the propulsion system axis 24. However, in other embodiments, the high-speed rotating structure 86 and its members 79, 80, and 84 may alternatively be rotatable about another rotational axis which is (e.g., laterally and/or angularly) offset from the rotational axis of the propulsor rotor 34.

The LPC rotor 78 is coupled to and rotatable with the LPT rotor 81. The LPC rotor 78 of FIG. 1, for example, is connected to the LPT rotor 81 by a low-speed shaft 88. At least (or only) the LPC rotor 78, the LPT rotor 81, and the low-speed shaft 88 collectively form a low-speed rotating structure 90 (e.g., a low-speed spool of the engine core 76). This low-speed rotating structure 90 of FIG. 1 and its members 78, 81, and 88 are rotatable about the propulsion system axis 24. However, in other embodiments, the low-speed rotating structure 90 and its members 78, 81, and 88 may alternatively be rotatable about another rotational axis which is (e.g., laterally and/or angularly) offset from the rotational axis of the propulsor rotor 34.

The low-speed rotating structure 90 (e.g., the low-speed shaft 88) is coupled to the propulsor rotor 34 through a drivetrain 92. This drivetrain 92 may be configured as a geared drivetrain, where a geartrain 94 (e.g., a transmission, a speed change device, an epicyclic geartrain, etc.) is disposed between and operatively couples the propulsor rotor 34 to the low-speed rotating structure 90 and its LPC rotor 78 and its LPT rotor 81. With this arrangement, the propulsor rotor 34 may rotate at a different (e.g., slower) rotational speed than the low-speed rotating structure 90 and its LPC rotor 78 and its LPT rotor 81. Here, the propulsor rotor 34 and the low-speed rotating structure 90 may rotate in a common (the same) direction about the propulsion system axis 24 or in opposite directions about the propulsion system axis 24 depending, for example, upon the specific configuration of the geartrain 94. Alternatively, the drivetrain 92 may be configured as a direct-drive drivetrain, where the geartrain 94 is omitted. With such an arrangement, the propulsor rotor 34 rotates at a common (the same) rotational speed as the low-speed rotating structure 90 and its LPC rotor 78 and its LPT rotor 81.

The turbine engine 32 of FIG. 1 is described above with a particular two rotating structure arrangement. The present disclosure, however, is not limited to such an exemplary arrangement. For example, the LPC rotor 78 may be omitted to configure the LPT rotor 81 as a power turbine (PT) rotor for the propulsor rotor 34. In another example, the turbine engine 32 may also include another rotating structure (e.g., an intermediate speed spool) for the engine core 76.

During operation of the aircraft propulsion system 20 of FIG. 1, ambient air within the external environment 22 is propelled by the rotating propulsor rotor 34 in the downstream, aft direction towards the propulsion system aft end 28. A major portion (e.g., more than 50%) of this air bypasses the turbine engine 32 to provide forward thrust while a minor portion (e.g., less than 50%) of the air flows into the turbine engine 32. For example, an outer stream of the air propelled by the rotating propulsor rotor 34 flows axially across the guide vane structure 36 and outside of the housing structure 54 and the structure base 50 (e.g., along the exterior flow boundary 56). The guide vane structure 36 conditions (e.g., straightens out, de-swirls, etc.) the outer stream of air within the external environment 22 to enhance the forward thrust. By contrast, an inner stream of the air propelled by the rotating propulsor rotor 34 may bypass the guide vane structure 36 and enter the turbine engine 32 and its engine flowpath 70 through the flowpath inlet 72. The air entering the engine flowpath 70 through the flowpath inlet 72 may be referred to as "core air".

The core air is compressed by the LPC rotor 78 and the HPC rotor 79 and directed into a combustion chamber 100 (e.g., an annular combustion chamber) of a combustor 102 (e.g., an annular combustor) in the combustor section 66. Fuel is injected into the combustion chamber 100 by one or more fuel injectors 104 and mixed with the compressed core air to provide a fuel-air mixture. This fuel-air mixture is ignited and combustion products thereof flow through and sequentially drive rotation of the HPT rotor 80 and the LPT rotor 81. The rotation of the HPT rotor 80 and the LPT rotor 81 respectively drive rotation of the HPC rotor 79 and the LPC rotor 78 and, thus, compression of the core air. The rotation of the LPT rotor 81 also drives the rotation of the propulsor rotor 34 through the geartrain 94. The turbine engine 32 and its low-speed rotating structure 90 thereby power operation of (e.g., drive rotation of) the propulsor rotor 34 during aircraft propulsion system operation.

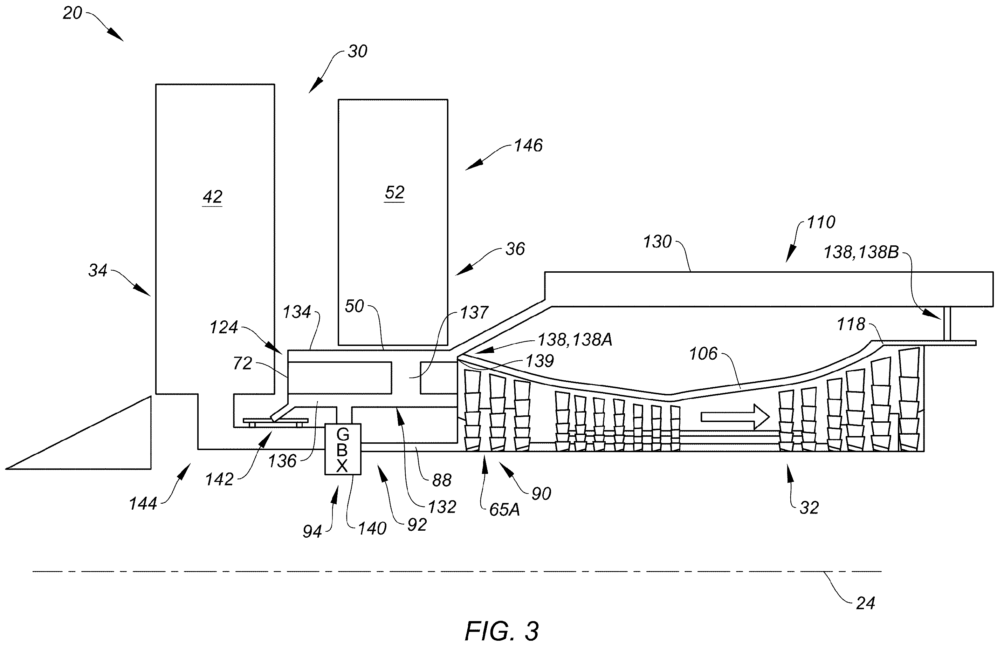

The engine sections 64-68 may be arranged sequentially along the propulsion system axis 24 and are housed within and/or formed by the housing structure 54. This housing structure 54 includes an engine case assembly 106, a nacelle 108, and a pylon structure 110 (FIG. 3).

The engine case assembly 106 houses one or more of the engine sections 65A-67B (e.g., the engine core 76). The engine case assembly 106 of FIG. 1, for example, extends axially along (e.g., axially overlaps) and extends circumferentially about (e.g., circumscribes) the engine sections 65A-67B and their respective bladed rotors 78-81. The engine case assembly 106 includes a plurality of interconnected engine case structures 112 collectively forming the engine case assembly 106. The engine case structures 112 may include, but are not limited to, an intermediate case (IMC) 114, a mid-turbine frame (MTF) 116, and/or a turbine exhaust case (TEC) 118. The intermediate case 114 forms a portion of the engine flow path 70 between the low-pressure compressor section 65A and the high-pressure compressor section 65B. The mid-turbine frame 116 forms a portion of the engine flow path 70 between the high-pressure turbine section 67A and the low-pressure turbine section 67B. The turbine exhaust case 118 forms a portion of the engine flow path 70 downstream of the turbine section 67, for example, between the turbine section 67 and the flowpath exhaust 74.

The nacelle 108 houses and provides an aerodynamic cover over the engine case assembly 106. The nacelle 108 of FIG. 1, for example, is disposed radially outboard of, extends axially along (e.g., axially overlaps) and extends circumferentially about (e.g., circumscribes) the engine core 76 and its engine case assembly 106. With the foregoing arrangement, the bladed rotors 78-81 are disposed within the housing structure 54. By contrast, the propulsor blades 42 and the guide vanes 52 are disposed (e.g., completely) outside of the housing structure 54.

The nacelle 108 of FIG. 2 includes an inlet structure 120 and an aft nacelle structure 122 (see also FIG. 1). The inlet structure 120 is disposed at an upstream, forward end 124 of the housing structure 54 next to and downstream of the propulsor rotor 34 and its propulsor blades 42. The inlet structure 120 is configured as an annular airflow splitter (e.g., an annular inlet lip of the nacelle 108) which splits the airflow propelled by the propulsor rotor 34 into the outer stream and the inner stream. The aft nacelle structure 122 forms a downstream, aft axial section of the exterior flow boundary 56, downstream and aft of the guide vane structure 36 and its structure base 50. This aft nacelle structure 122 may include one or more nacelle cowls disposed to opposing lateral sides of the aircraft propulsion system 20. Each of these nacelle cowls may be configured to pivot or otherwise move from a stowed position (for propulsion system operation) to an open position (for accessing engine accessories and/or the engine core 76 during turbine engine maintenance, inspection or the like).

Referring to FIG. 1, the aft nacelle structure 122 or, more generally, the housing structure 54 may also include an exhaust nozzle 126 which forms an outer peripheral boundary of the flowpath exhaust 74. The nacelle 108 may form a guide vane receptacle 128 for the guide vane structure 36. Herein, the term "receptacle" is used to describe an open space (e.g., unoccupied volume) in the aircraft propulsion system 20 inboard of the exterior flow boundary 56. This open space may or may not be defined by walls within the aircraft propulsion system 20. For example, a radial inner side (e.g., a bottom side) of the vane structure receptacle 128 may be formed by the pylon structure 110, one or more mounting structures attached to the pylon structure 110, and/or peripheral equipment mounted with the pylon structure 110. In another example, an axial side of the vane structure receptacle 128 may be formed by various supports, frames, accessories and/or the like part of and/or housed radially beneath the nacelle structures 120, 122. The structure base 50 may be disposed within the vane structure receptacle 128 (see FIG. 2) such that the outer side of the structure base 50 may be flush with outer radial sides of the nacelle structures 120, 122 to collectively form the exterior flow boundary 56.

With additional reference to FIG. 3 (nacelle 108 omitted for clarity), the pylon structure 110 mounts the propulsion system 20 onto the aircraft (e.g., to a wing, fuselage, empennage, etc.). More specifically, the pylon structure 110 supports the propulsion section 30, the turbine engine 32, and the nacelle 108 (see FIG. 1) and mounts the propulsion section 30, the turbine engine 32, and the nacelle 108 onto the aircraft. The pylon structure 110 includes a main pylon body 130 and a front center body (FCB) 132. The main pylon body 130 may be mounted onto or otherwise disposed at the aircraft (e.g., to a wing, fuselage, empennage, etc.). The front center body 132 is attached to the main pylon body 130. The main pylon body 130 and all or a portion of the front center body 132 may form a unitary structure. The term "unitary structure" as used herein means a single component, wherein elements of the main pylon body 130 and the front center body 132 are an inseparable body (e.g., formed of a single material, or a weldment of independent elements, etc.). Alternatively, the front center body 132 may be a discrete structural body mounted onto the main pylon body 130.

The front center body 132 is disposed at (e.g., on, adjacent, or proximate) the housing structure forward end 124 and, in particular, axially between the propulsor blades 42 and the low-pressure compressor section 65A. The front center body 132 includes an outer radial case structure 134 and an inner radial case structure 136. The outer radial case structure 134 and the inner radial case structure 136 extend circumferentially about (e.g., completely around) the axis 24. The outer radial case structure 134 forms a portion of the inlet structure 120 (FIGS. 1 and 2). The inner radial case structure 136 is disposed radially inward of the outer radial case structure 134. The inner radial case structure 136 may circumscribe and support the propulsor rotor 34 and the drivetrain 92 (e.g., the geartrain 94). The outer radial case structure 134 and the inner radial case structure 136 form the flowpath inlet 72 radially therebetween. The outer radial case structure 134 and the inner radial case structure 136 may be interconnected by radially extending struts, inlet guide vanes (e.g., fixed or variable guide vanes), or other interconnecting bodies of the pylon structure 110. For example, the pylon structure 110 of FIG. 3 includes an inlet guide vane assembly 137 extending between and connecting the outer radial case structure 134 and the inner radial case structure 136. The front center body 132 may generally form the engine flowpath 70 from the flowpath inlet 72 to the low-pressure compressor section 65A.

The propulsion section 30 and the turbine engine 32 are mounted onto the pylon structure 110. The engine case assembly 106 is mounted to the pylon structure 110 at one or more engine mounts 138. For example, the engine case assembly 106 may be mounted (e.g., mechanically fastened) to the front center body 132 at a forward engine mount 138A, which forward engine mount 138A may be configured as a flange 139 of the outer radial case structure 134. The engine case assembly 106 may be mounted (e.g., mechanically fastened) to the pylon structure 110 (e.g., the main pylon body 130) at a rear engine mount 138B, for example, on the mid-turbine frame 116 or turbine exhaust case 118. The engine case assembly 106 may be mounted to the pylon structure 110 at one or more intermediate mounting points between the forward engine mount 138A and the rear engine mount 138B. Components of the propulsion section 30 and the drivetrain 92 may also be mounted to or otherwise supported by the pylon structure 110. For example, the drivetrain 92 (e.g., the geartrain 94) of FIG. 3 includes a gearbox 140 mounted to the front center body 132 (e.g., the inner radial case structure 136), which gearbox 140 includes a gear assembly operably coupling the low-speed rotating structure 90 (e.g., the low-speed shaft 88) with the propulsor rotor 34. The front center body 132 (e.g., the inner radial case structure 136) may additionally support one or bearing assemblies 142 rotationally supporting the propulsor rotor 34. The front center body 132 (e.g., the outer radial case structure 134) may additionally form the structure base 50 such that each of the guide vanes 52 is coupled to the front center body 132. The configuration of the pylon structure 110 facilitates installation of the turbine engine 32, the propulsor rotor 34, and the guide vanes 52 onto the pylon structure 110 as discrete, respective modules 142, 144, 146.

The present disclosure mounting architecture of the propulsion system 20 facilitates a weight-efficient mount and pylon structure configuration relative to at least some conventional aircraft propulsion systems and, in particular, open rotor propulsion systems. Integration of the front center body 132 with the pylon structure 110 (e.g., the main pylon body 130) obviates the need for conventional mounting hardware (e.g., pylon attachment linkages) between a pylon and an engine case assembly, which mounting hardware could otherwise clash with other propulsion system members (e.g., the guide vane structure 36) due to the limited space available at the forward end 124. The configuration of the pylon structure 110 also facilitates installation and removal of one or more of the turbine engine 32, the propulsor rotor 34, and/or the guide vanes 52 (e.g., as the modules 142, 144, 146) while others of the turbine engine 32, the propulsor rotor 34, and/or the guide vanes 52 may remain mounted to the aircraft by the pylon structure 110.

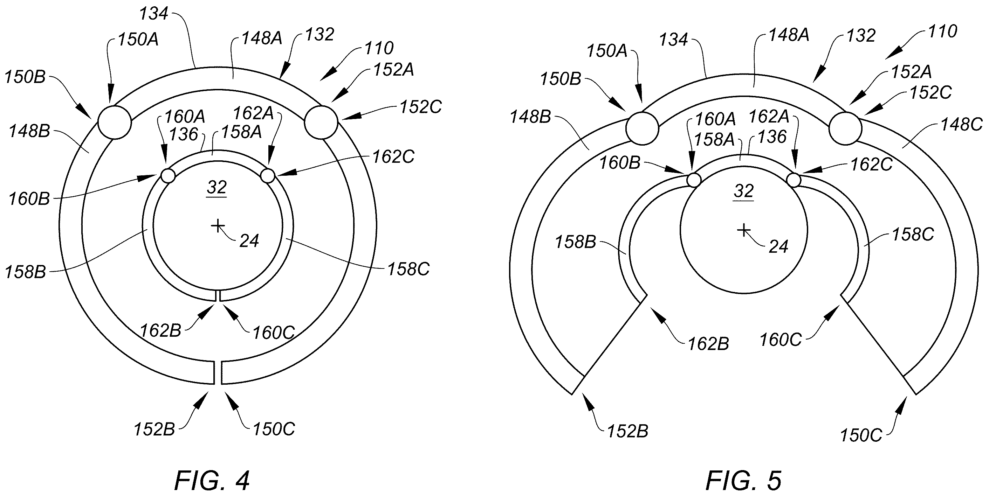

In some embodiments, referring to FIGS. 4 and 5, the front center body 132 may be circumferentially segmented into a plurality of structure segments to facilitate access to the propulsor rotor 34, the turbine engine 32, and/or the drivetrain 92.

The outer radial case structure 134 may be circumferentially segmented into a plurality of structure segments 148A-C. Each of these structure segments 148A-C extends circumferentially about the propulsion system axis 24 between circumferentially opposing ends 150A-C (generally referred to as "150") and 152A-C (generally referred to as "152") of the respective structure segment 148A-C. Here, the ends 150A and 152A are opposing ends of the first structure segment 148A. The ends 150B and 152B are opposing ends of the second structure segment 148B. The ends 150C and 152C are opposing ends of the third structure segment 148C. Each of the structure segments 148B, 148C, for example, may extend between forty-five degrees (45°) and one-hundred and sixty degrees (160°) inclusive about the propulsion system axis 24 between its opposing circumferential ends 150B and 152B, 150C and 152C. More particularly, each structure segment 148B, 148C may extend between sixty degrees (60°) and one-hundred and twenty degrees (120°) inclusive about the propulsion system axis 24 between its opposing circumferential ends 150B and 152B, 150C and 152C. The first structure segment 148A may then extend a remainder of the full three-hundred-and-sixty-degree hoop of the outer radial case structure 134 about the propulsion system axis 24 between its opposing circumferential ends 150A and 152A.

The first structure segment 148A of FIG. 4 (e.g., a top structure segment, a fixed structure segment, etc.) forms a fixed portion of the pylon structure 110 (see FIG. 3) which fixed portion, for example, may form part of the unitary structure of the pylon structure 110. The other structure segments 148B, 148C of FIG. 4 are (e.g., side structure segments, movable structure segments, etc.) collectively disposed diametrically opposite the first structure segment 148A. At the segment first ends 150A and 150B, the second structure segment 148B is movably attached (e.g., pivotably attached) to the first structure segment 148A. Similarly, at the segment second ends 152A and 152C, the third structure segment 148C is movably attached (e.g., pivotably attached) to the first structure segment 148A. At the second structure second end 152B and at the third structure first end 150C, the structure segments 148B and 148C are removably attached (e.g., mechanically fastened, latched, etc.) to one another at a joint between the second structure segment 148B and the third structure segment 148C. With this arrangement, the second structure segment 148B and/or the third structure segment 148C may each be pivoted or otherwise moved from a stowed position (e.g., see FIG. 4 position for propulsion system operation) to an open position (e.g., see FIG. 5 position for turbine engine maintenance, inspection, replacement, etc.). The opening of the structure segments 148B and/or 148C provides access to the propulsor rotor 34, the turbine engine 32, and/or the drivetrain 92 for maintenance, inspection and/or otherwise. The opening of the structure segments 148B and/or 148C may also provide an opening through which the propulsor rotor 34, the turbine engine 32, components of the drivetrain 92, and/or other turbine engine components, etc. may be removed from or installed with the aircraft propulsion system 20.

Similar to the outer radial case structure 134, the inner radial case structure 136 may be circumferentially segmented into a plurality of structure segments 158A-C. Each of these structure segments 158A-C extends circumferentially about the propulsion system axis 24 between circumferentially opposing ends 160A-C (generally referred to as "160") and 162A-C (generally referred to as "162") of the respective structure segment 158A-C. Here, the ends 160A and 162A are opposing ends of the first structure segment 158A. The ends 160B and 162B are opposing ends of the second structure segment 158B. The ends 160C and 162C are opposing ends of the third structure segment 158C. Each of the structure segments 158B, 158C, for example, may extend between forty-five degrees (45°) and one-hundred and sixty degrees (160°) inclusive about the propulsion system axis 24 between its opposing circumferential ends 160B and 162B, 160C and 162C. More particularly, each structure segment 158B, 158C may extend between sixty degrees (60°) and one-hundred and twenty degrees (120°) inclusive about the propulsion system axis 24 between its opposing circumferential ends 160B and 162B, 160C and 162C. The first structure segment 158A may then extend a remainder of the full three-hundred-and-sixty-degree hoop of the inner radial case structure 136 about the propulsion system axis 24 between its opposing circumferential ends 160A and 162A.

The first structure segment 158A of FIG. 4 (e.g., a top structure segment, a fixed structure segment, etc.) forms a fixed portion of the pylon structure 110 (see FIG. 3) which fixed portion, for example, may form part of the unitary structure of the pylon structure 110. The other structure segments 158B, 158C of FIG. 4 are (e.g., side structure segments, movable structure segments, etc.) collectively disposed diametrically opposite the first structure segment 158A. At the segment first ends 160A and 160B, the second structure segment 158B is movably attached (e.g., pivotably attached) to the first structure segment 158A. Similarly, at the segment second ends 162A and 162C, the third structure segment 158C is movably attached (e.g., pivotably attached) to the first structure segment 158A. At the second structure second end 162B and at the third structure first end 160C, the structure segments 158B and 158C are removably attached (e.g., mechanically fastened, latched, etc.) to one another at a joint between the second structure segment 158B and the third structure segment 158C. With this arrangement, the second structure segment 158B and/or the third structure segment 158C may each be pivoted or otherwise moved from a stowed position (e.g., see FIG. 4 position for propulsion system operation) to an open position (e.g., see FIG. 5 position for turbine engine maintenance, inspection, replacement, etc.). The structure segments 158B and 158C may be pivotable with or independent of the structure segments 148B and 148C. The opening of the structure segments 158B and/or 158C provides access to the propulsor rotor 34, the turbine engine 32, and/or the drivetrain 92 for maintenance, inspection and/or otherwise. The opening of the structure segments 158B and/or 158C may also provide an opening through which the propulsor rotor 34, the turbine engine 32, components of the drivetrain 92, and/or other turbine engine components, etc. may be removed from or installed with the aircraft propulsion system 20.

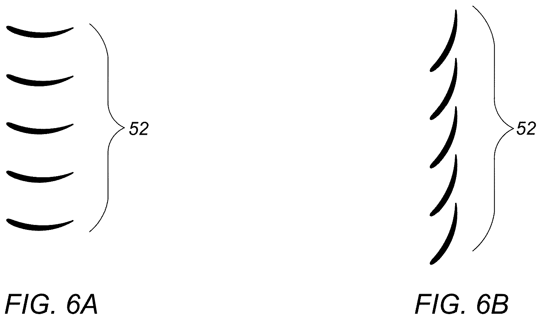

In some embodiments, referring to FIGS. 6A and 6B, some or all of the guide vanes 52 may each be pivotable between a feather position (see FIG. 6A) and an access position (e.g., see FIG. 6B). Between the feather position of FIG. 6A and the access position of FIG. 6B, each respective guide vane 52 may pivot at least or more than sixty degrees (60°) or seventy degrees (70°) (e.g., between seventy-five degrees (75°) and eighty-five degrees (85°), inclusive). By pivoting the respective guide vanes 52 to the access position of FIG. 6B, these guide vanes 52 may be positioned to facilitate nesting of the guide vanes 52 while the respective structure segment 148B, 148C (see FIGS. 4 and 5) is opened. Of course, in other embodiments, it is contemplated the structure segment(s) 148B, 148C (see FIGS. 4 and 5) may be opened without pivoting the respective guide vanes 52 to a particular position. In still other embodiments, it is contemplated one or more of the respective guide vanes 52 may be removed to provide additional room for opening the structure segment(s) 148B, 148C (see FIGS. 4 and 5).

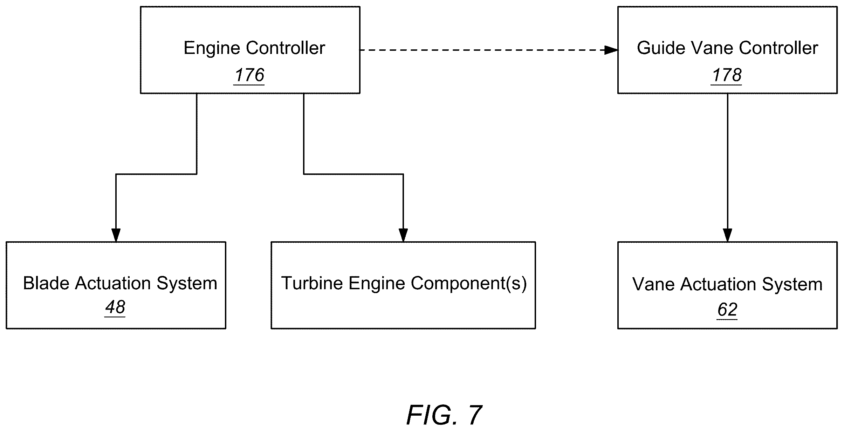

In some embodiments, referring to FIG. 7, the aircraft propulsion system 20 may be configured with multiple discrete controllers such as an onboard engine controller 176 and a guide vane controller 178. Examples of the engine controller 176 include, but are not limited to, an electronic engine controller (EEC), an electronic control unit (ECU), a full-authority digital engine controller (FADEC), etc. This engine controller 176 is configured to control and/or monitor operation of various turbine engine component(s) as well as various other propulsion system members including the blade actuation system 48. By contrast, the guide vane controller 178 is configured to control operation of the vane actuation system 62. While this guide vane controller 178 is physically discrete from the engine controller 176 and may (or may not) be located remote from the engine controller 176, the guide vane controller 178 may be in signal communication with (e.g., hardwired and/or wirelessly coupled to) the engine controller 176 to coordinate operation of the various actuation systems (e.g., 48 and 62 of FIG. 2). Of course, in other embodiments, it is contemplated the single engine controller 176 may also (e.g., directly) control operation of the vane actuation system 62.

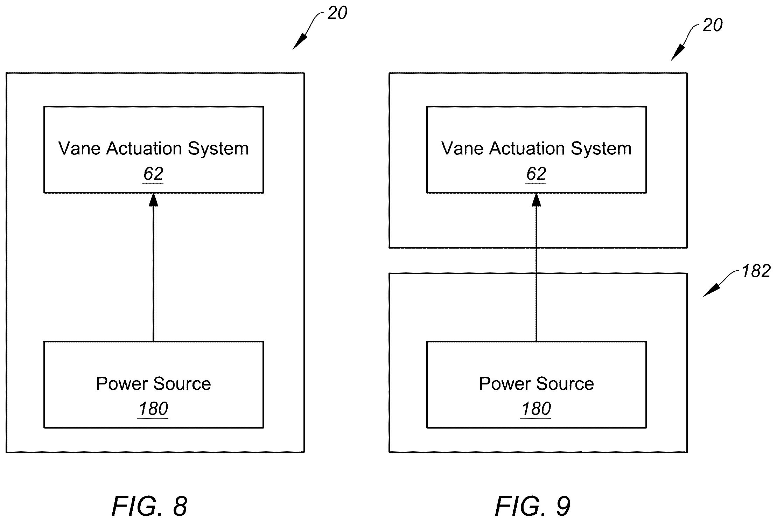

In some embodiments, referring to FIG. 8, the vane actuation system 62 may be powered by a power source 180 onboard the aircraft propulsion system 20. The vane actuation system 62, for example, may be electrically powered by a generator and/or electrical power bus onboard the aircraft propulsion system 20. In another example, the vane actuation system 62 may be pneumatically powered by an air system (e.g., a bleed system) onboard the aircraft propulsion system 20. In still another example, the vane actuation system 62 may be fluidly powered (e.g., hydraulically powered) by a fluid system onboard the aircraft propulsion system 20. Here, a working fluid for the fluid system may be lubricant, coolant, fuel, or the like. In other embodiments, referring to FIG. 9, the power source 180 may be remote from the aircraft propulsion system 20. The power source 180 of FIG. 9, for example, may be arranged in at least one member 182 of an airframe of the aircraft (e.g., in an aircraft fuselage, in an aircraft wing and/or in the pylon structure 110).

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An assembly for an aircraft propulsion system (20), the assembly comprising:
a propulsion system housing structure (54) comprising an upstream housing end and a pylon structure (110), the pylon structure (110) comprising a main pylon body (130) and a front center body (132) attached to the main pylon body (130), the front center body (132) disposed at the upstream housing end, the front center body (132) comprising an outer radial case structure (134) and an inner radial case structure (136) extending circumferentially about an axis (24) of the aircraft propulsion system (20);
an open guide vane structure (36) comprising a guide vane structure base (50) disposed at the outer radial case structure (134); and
a propulsion system flowpath (70) extending through the aircraft propulsion system (20) from an inlet (72) into the propulsion system flowpath (70) to an exhaust (74) from the propulsion system flowpath (70), the inlet (72) formed by the front center body (132) between the outer radial case structure (134) and the inner radial case structure (136).

2. The assembly of claim 1, wherein the front center body (132) forms the guide vane structure base (50).

3. The assembly of claim 2, wherein the open guide vane structure (36) further comprises a plurality of open guide vanes (52), each of the plurality of open guide vanes (52) are coupled to the guide vane structure base (50), and each of the plurality of open guide vanes (52) projects radially outward from the guide vane structure base (50).

4. The assembly of claim 1, 2 or 3, further comprising an open propulsor rotor (34) comprising a plurality of open propulsor blades (42) arranged circumferentially around the axis (24), each of the plurality of open propulsor blades (42) projecting radially out into an environment (22) external to the aircraft propulsion system (20), the open propulsor rotor (34) supported by the front center body (132).

5. The assembly of claim 4, further comprising a turbine engine (32) comprising an engine case assembly (106), a compressor section (65), a combustor section (66), and a turbine section (67), the compressor section (65), the combustor section (66), and the turbine section (67) are housed within the engine case assembly (106), the turbine section (67) comprising a turbine rotor operatively coupled to the open propulsor rotor (34), the turbine rotor configured to drive rotation of the open propulsor rotor (34) about the axis (24),
wherein, optionally:
the propulsion system flowpath (70) extends through the compressor section (65), the combustor section (66), and the turbine section (67) between the inlet (72) and the exhaust (74); and/or
the turbine rotor is operatively coupled to the open propulsor rotor (34) by a drivetrain (92), and the drivetrain (92) comprises a gearbox (140) mounted to the front center body (132).

6. The assembly of any preceding claim, further comprising a turbine engine (32) comprising an engine case assembly (106), the engine case assembly (106) forming an exterior housing of the turbine engine (32), the engine case assembly (106) mounted to the pylon structure (110) at the front center body (132).

7. The assembly of claim 6, wherein the engine case assembly (106) is further mounted to the pylon structure (110) at the main pylon body (130).

8. The assembly of any preceding claim, wherein the outer radial case structure (134) comprises a fixed outer structure segment (148A), a first outer pivotable structure segment (148B), and a second outer pivotable structure segment (148C), the first outer pivotable structure segment (148B) and the second outer pivotable structure segment (148C) are each pivotably mounted to the fixed outer structure segment (148A), the first outer pivotable structure segment (148B) and the second outer pivotable structure segment (148C) are each pivotable between a stowed outer segment position and an open outer segment position.

9. The assembly of claim 8, wherein the inner radial case structure (136) comprises a fixed inner structure segment (158A), a first inner pivotable structure segment (158B), and a second inner pivotable structure segment (158C), the first inner pivotable structure segment (158B) and the second inner pivotable structure segment (158C) are each pivotably mounted to the fixed inner structure segment (158A), the first inner pivotable structure segment (158B) and the second inner pivotable structure segment (158C) are each pivotable between a stowed inner segment position and an open inner segment position.

10. The assembly of any preceding claim, wherein the main pylon body (130), the outer radial case structure (134), and the inner radial case structure (136) form a unitary structure.

11. The assembly of any preceding claim, wherein the propulsion system housing structure (54) further comprises a nacelle structure disposed radially outboard of and partially covering the front center body (132), the nacelle structure forms an exterior flow boundary (56) for the aircraft propulsion system (20) that borders an environment (22) external to the aircraft propulsion system (20).

12. The assembly of claim 11, wherein the nacelle structure (36) forms a receptacle (128) at the guide vane structure base (50).

13. The assembly of any preceding claim, wherein the pylon structure (110) further comprises an inlet guide vane assembly (137) extending between the outer radial case structure (134) and the inner radial case structure (136).

14. An assembly for an aircraft propulsion system (20), the assembly comprising:
a propulsion system housing structure (54) comprising an upstream housing end and a pylon structure (110), the pylon structure (110) comprising a front center body (132) disposed at the upstream housing end, the front center body (132) comprising an outer radial case structure (134) and an inner radial case structure (136) extending circumferentially about an axis (24) of the aircraft propulsion system (20);
an open guide vane structure (36) comprising a guide vane structure base (50) and a plurality of open guide vanes (52), the guide vane structure base (50) formed by the outer radial case structure (134), the plurality of open guide vanes (52) coupled to the guide vane structure base (50) and projecting radially outward from the guide vane structure base (50); and
a propulsion system flowpath (70) extending through the aircraft propulsion system (20) from an inlet (72) into the flowpath (70) to an exhaust (74) from the flowpath (70), the inlet (72) formed by the front center body (132) between the outer radial case structure (134) and the inner radial case structure (136),
wherein, optionally, the assembly further comprises:
a turbine engine (32) comprising an engine case assembly (106), the engine case assembly (106) forming an exterior housing of the turbine engine (32), the engine case assembly (106) mounted to the pylon structure (110) at the front center body (132), the turbine engine (32) further forming the propulsion system flowpath (70) between the inlet and the exhaust; and/or
an open propulsor rotor (34) comprising a plurality of open propulsor blades (42) arranged circumferentially around the axis (24), each of the plurality of open propulsor blades (42) projecting radially out into an environment (22) external to the aircraft propulsion system (20), the open propulsor rotor (34) supported by the front center body (132).

15. An assembly for an aircraft propulsion system (20), the assembly comprising:
a propulsion system housing structure (54) comprising a pylon structure (110), the pylon structure (110) comprising a main pylon body (130) and a front center body (132) attached to the main pylon body (130), the front center body (132) comprising an outer radial case structure (134) and an inner radial case structure (136) extending circumferentially about an axis (24) of the aircraft propulsion system (20),
the outer radial case structure (134) comprising a fixed outer structure segment (148A), a first outer pivotable structure segment (148AB), and a second outer pivotable structure segment (148C), the fixed outer structure segment (148A) attached to the main pylon body (130), the first outer pivotable structure segment (148B) and the second outer pivotable structure segment (148C) each pivotably mounted to the fixed outer structure segment (148A), and
the inner radial case structure (136) comprising a fixed inner structure segment (158A), a first inner pivotable structure segment (158B), and a second inner pivotable structure segment (158C), the first inner pivotable structure segment (158B) and the second inner pivotable structure segment (158C) each pivotably mounted to the fixed inner structure segment (158A); and
a propulsion system flowpath (70) extending through the aircraft propulsion system from an inlet (72) into the propulsion system flowpath (70) to an exhaust (74) from the propulsion system flowpath (70), the inlet (72) formed by the front center body (132) between the outer radial case structure (134) and the inner radial case structure (136),
wherein, optionally, the main pylon body (130) and the fixed outer structure segment (148A) form a unitary structure (36).
